# EUROPEAN PATENT SPECIFICATION

(11) **EP 4 171 909 B1**
(45) Date of publication and mention of the grant of the patent: **22.04.2026**
(21) Application number: 21735673.2
(22) Date of filing: 23.06.2021
(51) Int. Cl.: B23D 47/02, B27B 9/02

(54) **HANDHELD CIRCULAR SAWS WITH IMPROVED CUTTING CAPABILITIES**
HANDKREISSÄGEN MIT VERBESSERTEN SCHNEIDEFÄHIGKEITEN
SCIES CIRCULAIRES PORTATIVES AVEC CAPACITÉS DE COUPE AMÉLIORÉES

(30) Priority: 25.06.2020 US 202063044034 P
(43) Date of publication of application: 03.05.2023
(60) Divisional application: 25214630.3
(73) Proprietor: Festool GmbH, 73240 Wendlingen am Neckar (DE)
(72) Inventor: WERBACH, Martin, 70327 Stuttgart (DE); HOEFER, Tobias, 73660 Urbach (DE); RAU, Johannes, 73207 Plochingen (DE)
(74) Representative: Herrmann, Jochen
(86) International application number: PCT/EP2021/067125
(87) International publication number: WO 2021/259992

(56) References cited:
- EP-A2- 1 110 651
- EP-A2- 2 036 686
- WO-A1-2013/033704
- WO-A1-2017/208708
- DE-A1- 102019 108 793
- GB-A- 1 316 535
- US-A- 3 721 141
- US-A1- 2003 037 445
- US-A1- 2006 156 887

## Description

### Related Application

This application claims priority to U.S. Provisional Patent Application No. 63/044,034, which was filed on June 25, 2020.

### Field of the Disclosure

The present disclosure is directed generally to handheld circular saws with improved cutting capabilities.

### Background of the Disclosure

Circular saws utilize a rotating circular saw blade to cut a workpiece. Handheld circular saws are a class of circular saws that is configured to be held and manipulated by a user during operative use of the handheld circular saws to cut the workpiece. Conventional handheld circular saws generally are relatively lightweight and may be utilized to create cuts that may be inaccessible to larger and/or heavier stationary and/or semi-stationary circular saws, such as table saws, radial arm saws, miter saws, chop saws, upcut saws, and panel saws. As an example, conventional handheld circular saws may be moved to and/or utilized in locations where it may be impractical, or impossible, to utilize stationary and semi-stationary circular saws. As another example, conventional handheld circular saws may be smaller than stationary and semi-stationary circular saws, thereby permitting the conventional handheld circular saws to access regions of the workpiece that may be inaccessible to stationary and semi-stationary circular saws.

Document EP 2 036 686 A2 discloses a handheld circular saw, comprising a motor including a motor shaft configured to rotate about a shaft rotational axis; a circular saw blade; and an arbor configured to operatively attach the circular saw blade having a blade diameter of about 185.4 mm to the handheld circular saw and to receive a torque from the motor when the motor shaft rotates about the shaft rotational axis; wherein the handheld circular saw has a maximum depth-of-cut, and further wherein a ratio of the maximum depth-of-cut to the blade diameter is at least 0.35 and at most 0.45, wherein the motor defines a motor diameter.

While effective in certain circumstances, conventional handheld circular saws still may suffer from distinct limitations. Thus, there exists a need for handheld circular saws with improved cutting capabilities.

### Summary of the Disclosure

According to the invention, a handheld circular saw defined by claim 1 is provided. Preferred embodiments are defined by the dependent claims.
In some examples, the handheld circular saw includes a base plate that defines an arbor-facing side. In some such examples, a projection of the base plate, as viewed from the arbor-facing side, defines a footprint for the handheld circular saw and at least 95% of the handheld circular saw is fully contained within the footprint. In some such examples, the base plate may define a base plate width, and an entirety of the handheld circular saw may be contained within the base plate width.

### Brief Description of the Drawings

Fig. 1 is a schematic illustration of examples of a handheld circular saw according to the present disclosure.
Fig. 2 is a less schematic top profile view of an example of a handheld circular saw according to the present disclosure.
Fig. 3 is a less schematic right side view of an example of a handheld circular saw according to the present disclosure.
Fig. 4 is a less schematic left side view of an example of a handheld circular saw according to the present disclosure.
Fig. 5 is another less schematic left side view of an example of a handheld circular saw according to the present disclosure.
Fig. 6 is another less schematic left side view of an example of a handheld circular saw according to the present disclosure.
Fig. 7 is a less schematic front view of an example of a handheld circular saw according to the present disclosure.
Fig. 8 is a less schematic rear view of an example of a handheld circular saw according to the present disclosure.
Fig. 9 is a less schematic top view of an example of a handheld circular saw according to the present disclosure.
Fig. 10 is a less schematic bottom view of an example of a handheld circular saw according to the present disclosure.
Fig. 11 is a less schematic cross-sectional view of the circular saw of Figs. 2-10 taken along line 11-11 of Fig. 4.
Fig. 12 is a less schematic illustration of examples of components of handheld circular saws, according to the present disclosure.
Fig. 13 is a less schematic illustration of examples of components of handheld circular saws, according to the present disclosure.

### Detailed Description and Best Mode of the Disclosure

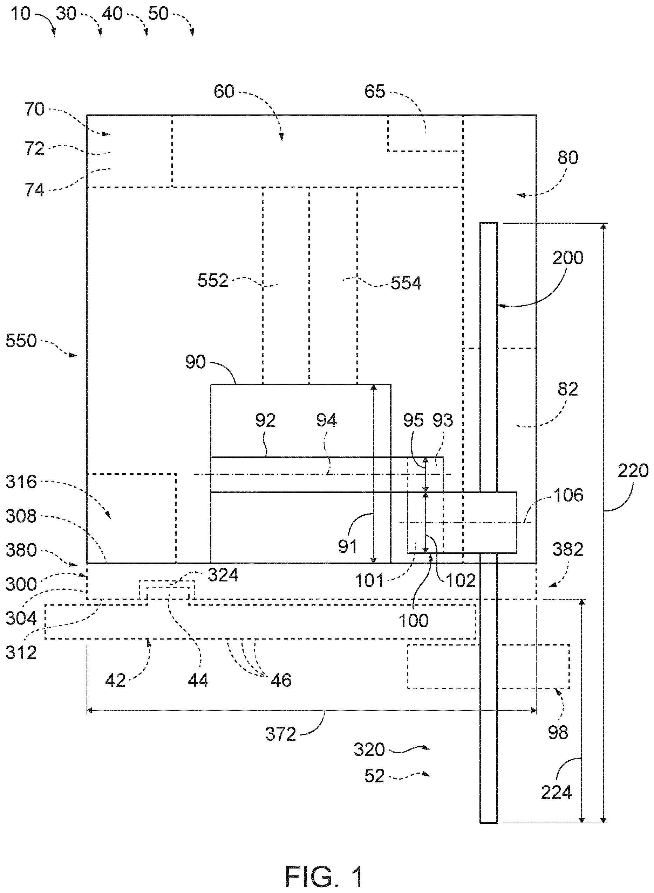

Figs. 1-13 provide examples of handheld circular saws 10 and/or components thereof, according to the present disclosure. Elements that serve a similar, or at least substantially similar, purpose are labeled with like numbers in each of Figs. 1-13, and these elements may not be discussed in detail herein with reference to each of Figs. 1-13. Similarly, all elements may not be labeled in each of Figs. 1-13, but reference numerals associated therewith may be utilized herein for consistency. Elements, components, and/or features that are discussed herein with reference to one or more of Figs. 1-13 may be included in and/or utilized with any of Figs. 1-13 without departing from the scope of the present disclosure.

In general, elements that are likely to be included in a particular embodiment are illustrated in solid lines, while elements that are optional are illustrated in dashed lines. However, elements that are shown in solid lines may not be essential to all embodiments and, in some embodiments, may be omitted without departing from the scope of the present disclosure.

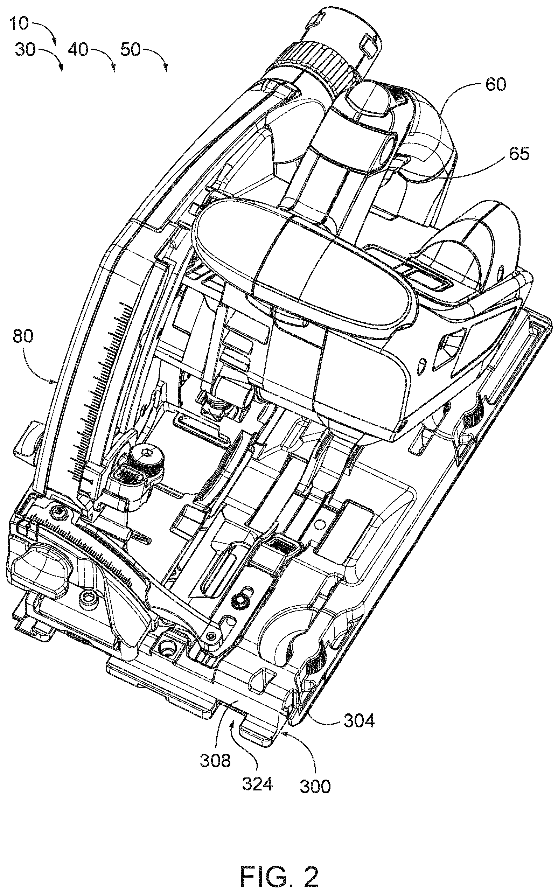

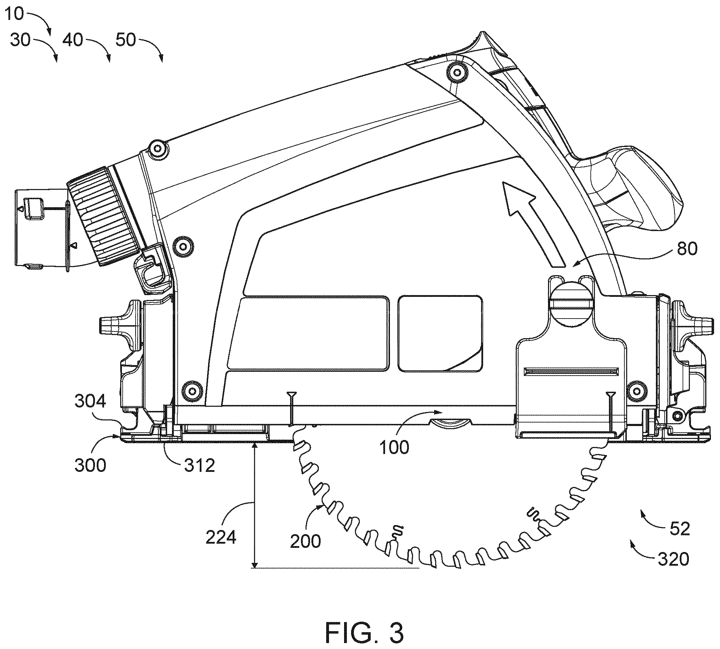

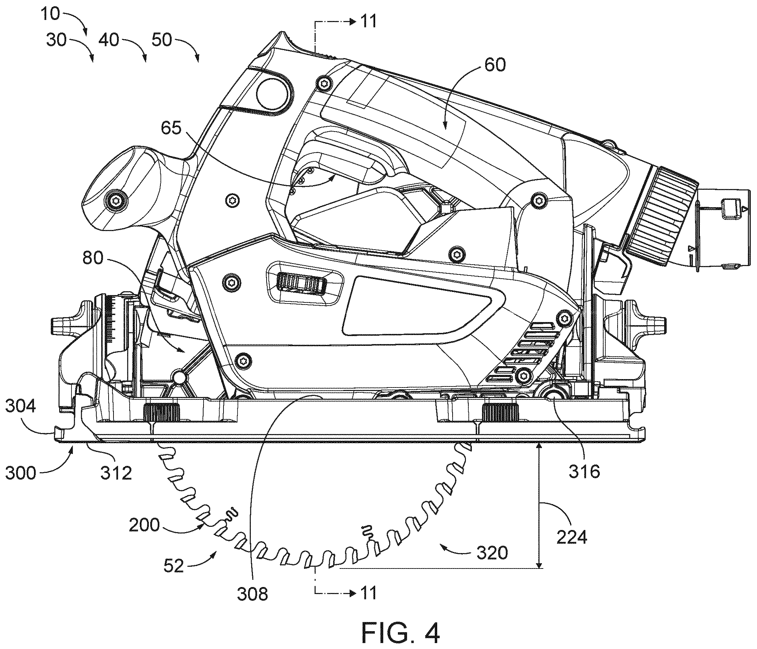

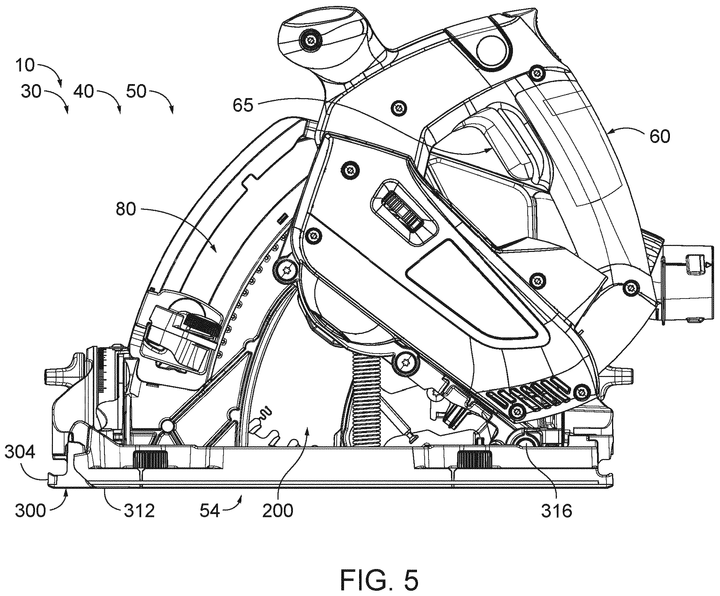

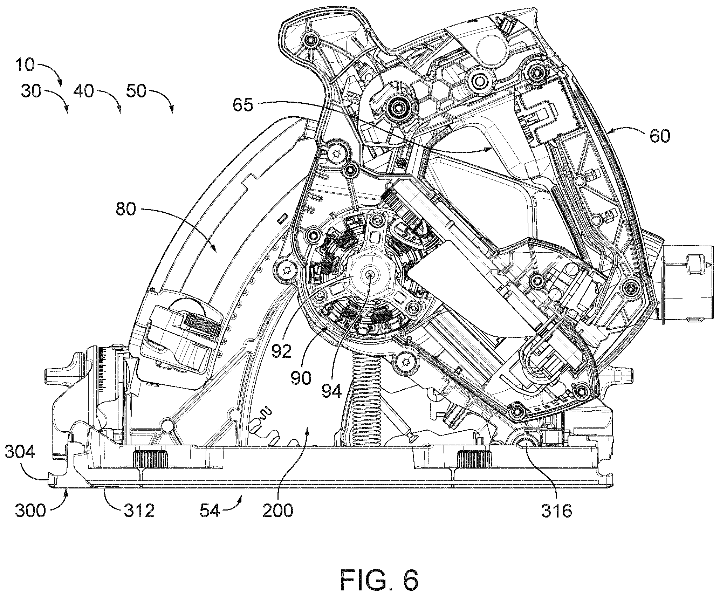

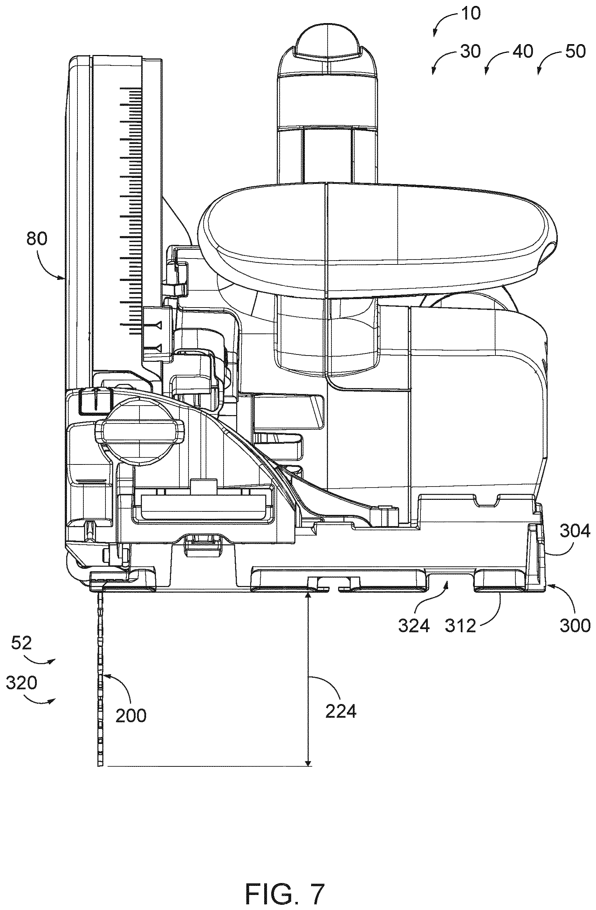

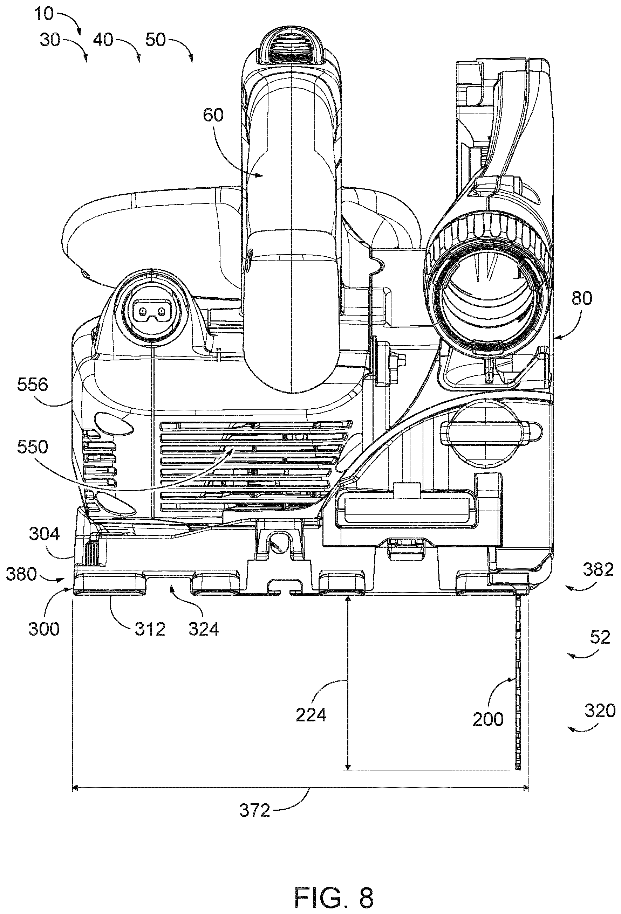

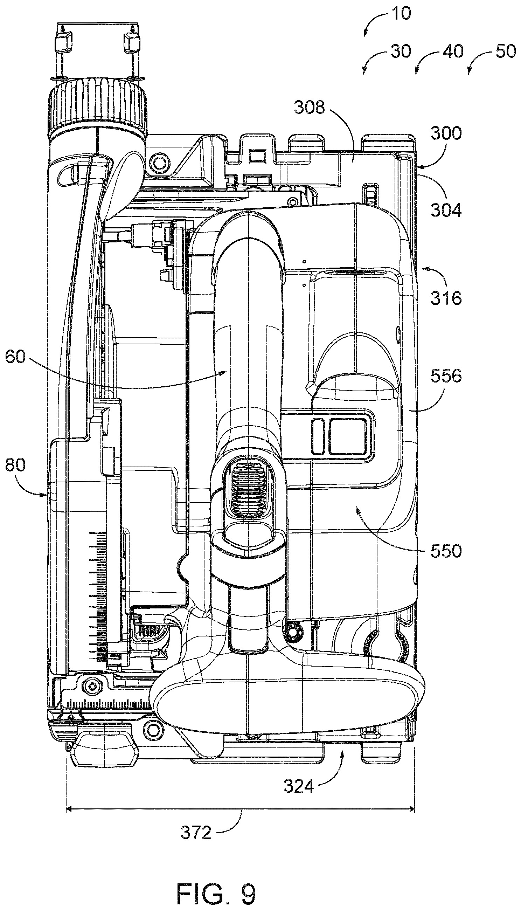

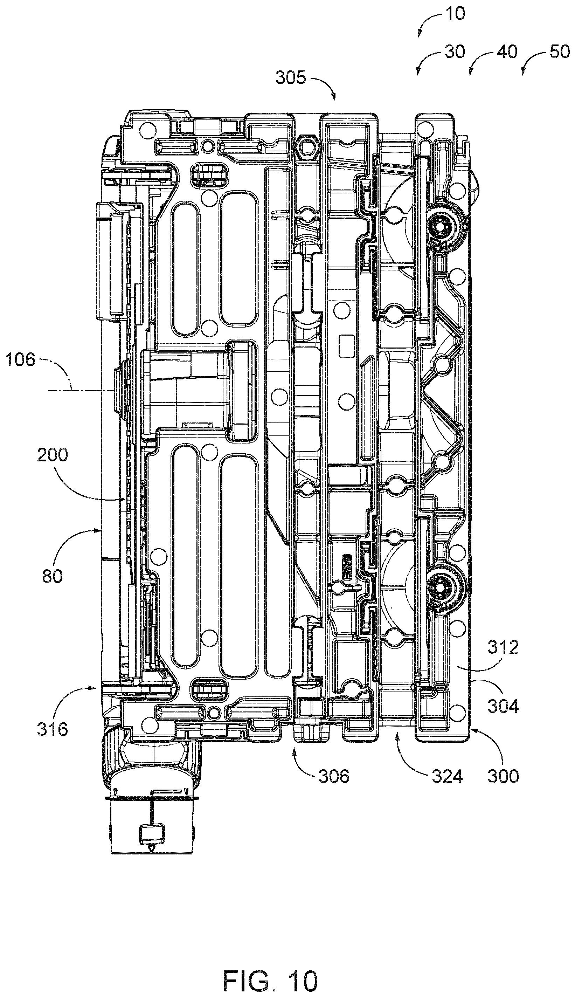

Fig. 1 is a schematic illustration of examples of handheld circular saws 10 according to the present disclosure, while Figs. 2-10 are less schematic illustrations of an example of a handheld circular saw 10, according to the present disclosure, that also may include and/or be a plunge saw 30, a track saw 40, and/or a bevel saw 50. More specifically, Fig. 2 illustrates a top profile view of handheld circular saw 10, and Fig. 3 illustrates a right side view of handheld circular saw 10. Fig. 4 illustrates a left side view of handheld circular saw 10 illustrating the handheld circular saw in a fully plunged orientation 52, Fig. 5 illustrates the left side view of handheld circular saw 10 illustrating the handheld circular saw in a fully retracted orientation 54, and Fig. 6 illustrates the left side view of Fig. 5 with several covers removed. Fig. 7 is a front view of handheld circular saw 10, Fig. 8 is a rear view of handheld circular saw 10, Fig. 9 is a top view of handheld circular saw 10, and Fig. 10 is a bottom view of handheld circular saw 10.

As illustrated collectively by Figs. 1-10, handheld circular saws 10 include a motor 90 that includes a motor shaft 92 configured to rotate about a shaft rotational axis 94. Handheld circular saws 10 also include an arbor 100 configured to operatively attach a circular saw blade 200 to the handheld circular saw and to receive a torque from motor 90 when motor shaft 92 rotates about the shaft rotational axis. Receipt of this torque may cause the arbor to rotate about an arbor rotational axis 106, which in turn may cause the circular saw blade to rotate about the arbor rotational axis. Stated another way, circular saw blade 200 may be configured for rotational movement with arbor 100. Rotation of circular saw blade 200 may facilitate cutting of a workpiece 98 with the circular saw blade, as schematically illustrated in Fig. 1.

Handheld circular saws 10 may be any suitable type or style of handheld circular saw that is adapted, configured, designed, and/or constructed to utilize circular saw blade 200 to cut the workpiece. In some examples, handheld circular saws 10 may include additional functions and/or functionality. Examples of such handheld circular saws 10 include a plunge saw 30, a track saw 40, and/or a bevel saw 50. In some examples, handheld circular saws 10 may include structures and/or features from two or more of the above saws, and/or may incorporate functionality of two or more of the above saws. As an example, and as discussed in more detail herein, a given handheld circular saw 10 may be and/or may incorporate and/or include functionality of plunge saw 30, track saw 40, and/or bevel saw 50. Handheld circular saws 10 according to the present disclosure thus may include one or more of the features disclosed herein, but handheld circular saws 10 are not required to include all of the features disclosed herein.

Motor 90 may include any suitable structure that may provide the motive force for rotation of motor shaft 92 and/or for actuation of circular saw blade 200. Examples of motor 90 include an electric motor, an AC electric motor, a DC electric motor, a brushless DC motor, a variable-speed motor, and/or a single-speed motor.

As illustrated in dashed lines in Fig. 1 and in solid lines in Figs. 2, 4-6, 8-9, and 11, handheld circular saws 10 may include a gripping region 60 that is configured to be gripped and/or held by a user during operation of the handheld circular saw. Gripping region 60, when present, also may be referred to herein as and/or may be a handle, or hand grip.

As also illustrated in dashed lines in Fig. 1 and in solid lines in Figs. 2, 4-6, and 11, handheld circular saws 10 may include at least one switch 65. Switch(es) 65, when present, may be configured to be selectively actuated by the user of the handheld circular saw, such as to enable and/or permit electric current to be provided to at least one other component of the handheld circular saw and/or to permit powered operation of the at least one other component of the handheld circular saw.

As examples, selective actuation of switch(es) 65 may be utilized to enable operation of a motor controller 554 of the handheld circular saw, as illustrated in Figs. 1 and 12-13, to selectively apply an electric current to motor 90, to enable the motor controller to selectively apply the electric current to the motor, and/or to permit, or direct, the motor to provide the motive force for rotation of the motor shaft. In some examples, the electric current may be utilized to power, or to directly power, at least one other component of the handheld circular saw, such as motor 90. In some such examples, the electric current also may be referred to herein as an electric power signal. In some examples, the electric current may be an electric data signal that is sent to at least one other component of the handheld circular saw, such as the motor controller of the handheld circular saw. In some such examples, the electric current also may be referred to herein as a data signal and/or as an electric data signal. Examples of switch 65 include an electrical switch, a normally open electrical switch, a momentary electrical switch, and/or a locking momentary electrical switch.

As also illustrated in dashed lines in Fig. 1 and in solid lines in Figs. 2-10, handheld circular saws 10 may include a workpiece support 300. Workpiece support 300, when present, may be configured to support workpiece 98 and/or to position the handheld circular saw relative to the workpiece when the workpiece is cut or otherwise acted upon by the implement. For example, many handheld circular saws 10 include workpiece support 300 in the form of a base plate 304, a foot plate, a shoe, a rack, and/or a pad.

Handheld circular saws 10 may include any suitable power source, and corresponding power structures, for powering motor 90. Examples of the power structures include a power supply structure 70, such as a power cord 72 and/or a battery 74, as illustrated in Fig. 1.

As also illustrated in dashed lines in Fig. 1 and in solid lines in Figs. 2-11, handheld circular saws 10 may include a blade guard 80. Blade guard 80, when present, may be configured to cover, to house, and/or to contain at least a region of circular saw blade 200, such as to prevent, or to decrease a potential for, contact between the user and the circular saw blade. Some examples of handheld circular saws 10 may be configured such that circular saw blade 200 moves and/or pivots in and out of blade guard 80 as illustrated, for example, by the transition between the configuration that is illustrated in Fig. 3 and the configuration that is illustrated in Fig. 6. Some examples of handheld circular saws 10 may be configured such that blade guard 80 includes a retractable region 82, as illustrated in Fig. 1. The retractable region may be configured to fold, rotate, and/or otherwise retract when the handheld circular saw is utilized to cut the workpiece. Retractable region 82 additionally or alternatively may be referred to as a retracting region 82 and/or a collapsing region 82.

In some examples, and as discussed, handheld circular saws 10 may include and/or be plunge saw 30. In examples of handheld circular saws 10 that are or include a plunge saw 30, arbor 100 may be configured to move relative to workpiece support 300, such as to selectively vary a region 320 of circular saw blade 200 that projects from the workpiece support and/or to selectively vary a depth-of-cut of the handheld circular saw. For example, arbor 100 may be configured to pivot relative to workpiece support 300, as illustrated by the transition between the configuration that is illustrated in Figs. 3-4 and 7-8, and the configuration that is illustrated in Figs. 5-6.

As a more specific example, workpiece support 300 may include and/or be base plate 304, which may define an arbor-facing side 308 and an arbor-opposed side 312. Arbor 100 may be operatively attached to arbor-facing side 308 of base plate 304 with, via, and/or utilizing a base plate pivot 316. Stated another way, arbor-facing side 308 may face toward arbor 100. In such examples, arbor 100 and base plate 304 may be configured to rotate, relative to one another, about base plate pivot 316, such as to selectively vary region 320 of circular saw blade 200 that extends on arbor-opposed side 312 of the base plate, as perhaps best illustrated by the transition from the configuration that is illustrated in Figs. 1, 3-4, 7-8, and 11, which illustrate a fully plunged orientation 52, to the configuration that is illustrated in Figs. 5-6, which illustrate a fully retracted orientation 54.

Stated another way, arbor 100 may be configured to pivot relative to workpiece support 300 throughout a range of relative orientations, or relative angles, that may be bounded by the fully plunged orientation and the fully retracted orientation. For each relative orientation in this range of relative orientations, circular saw blade 200 may extend on arbor-opposed side 312 by a corresponding amount, thereby providing a corresponding depth-of-cut for the handheld circular saw.

In some examples, and as discussed, handheld circular saws 10 may include and/or be track saw 40. In examples of handheld circular saws 10 that are or include track saw 40, base plate 304 may include a rib-receiving channel 324, as illustrated in Figs. 1-2 and 7-11. Rib-receiving channel 324 may be configured to receive a raised elongate rib 44 of a track 42, as perhaps best illustrated in Fig. 1. Track 42 also may be referred to herein as an elongate track 42 and may be formed from one or more elongate track segments, or track sections, 46, which may be operatively attached to one another to define any suitable track length. During operation of track saws 40, track 42 may be operatively attached, or clamped, to workpiece 98 such that an edge of the track corresponds to a desired cut line for the track saw. Subsequently, the track saw may be positioned, relative to the track, such that raised elongate rib 44 is positioned within rib-receiving channel 324, and the track saw then may be translated along at least a fraction of the length of the elongate track, thereby producing a straight cut along the desired cut line.

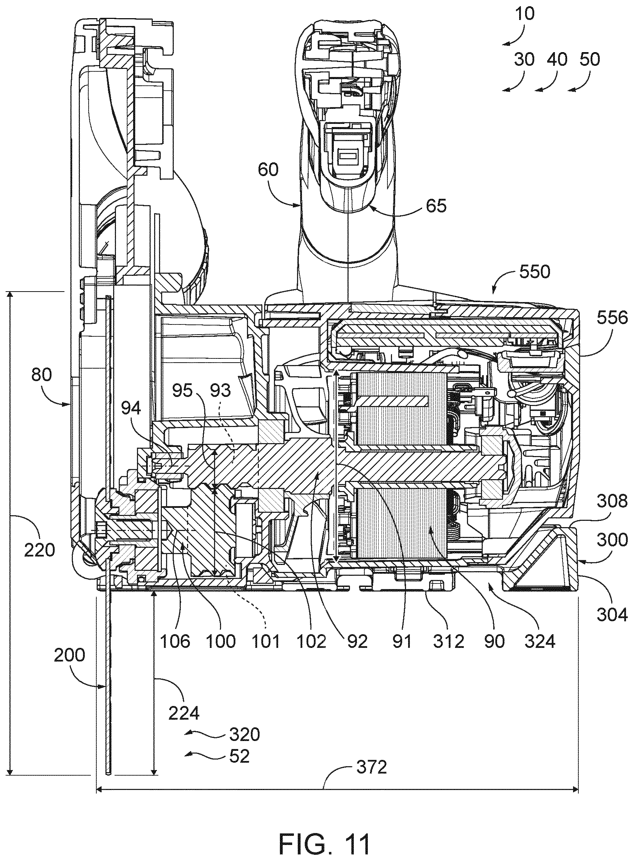

Handheld circular saws 10, according to the present disclosure, may have and/or exhibit an improved, a high, and/or a relatively higher maximum depth-of-cut 224, as illustrated in Figs. 1, 3-4, 7-8, and 11, when compared to conventional handheld circular saws. This improved maximum depth-of-cut 224 may permit and/or facilitate cutting of thicker workpieces for a given blade diameter 220 of circular saw blade 200, as illustrated in Figs. 1 and 11, when compared to conventional handheld circular saws. As such, handheld circular saws 10, according to the present disclosure, may provide improved and/or increased functionality and/or versatility when compared to conventional handheld circular saws.

As used herein, the phrases "maximum depth-of-cut" and/or "maximum depth-of-cut 224" may indicate and/or refer to a maximum extent to which circular saw blade 200 can extend below an arbor-opposed side 312 of a base plate 304 of handheld circular saw 10. Stated another way, the "maximum depth-of-cut" may indicate and/or refer to a maximum thickness of workpiece 98 that handheld circular saw 10 can cut, or may be configured to cut, in a single pass. When handheld circular saw 10 includes plunge saw 30, the "maximum depth-of-cut" may correspond to fully plunged orientation 52 of the plunge saw.

It may be desirable to optimize, to maximize, and/or to increase maximum depth-of-cut 224 of handheld circular saw 10, such as to maximize and/or to increase the thickness of the workpiece that may be cut in the single pass utilizing the handheld circular saw. Stated another way, and for a given blade diameter 220, it may be desirable to optimize and/or to maximize the maximum depth-of-cut 224 that may be realized and/or achieved.

With this in mind, handheld circular saws 10, according to the present disclosure, may have and/or define a ratio of maximum depth-of-cut 224 to blade diameter 220 that is greater than a corresponding ratio that may be achieved by conventional handheld circular saws. According to the invention, the ratio include ratios of , at least 0.35, at least 0.36, at least 0.37, at least 0.38, at least 0.39, at least 0.4, at least 0.41, at least 0.42, at least 0.43, at least 0.44, and, at most 0.45, at most 0.44, at most 0.43, at most 0.42, at most 0.41, at most 0.40, at most 0.39, at most 0.38, at most 0.37, at most 0.36.

As illustrated in Figs. 1 and 11, handheld circular saws 10, according to the present invention includes an arbor 100 with arbor rotational axis 106 that is parallel, to shaft rotational axis 94 of motor shaft 92 of motor 90. This may be in contrast to worm drive handheld circular saws, in which the arbor axis of rotation may be perpendicular, or at least substantially perpendicular, to the shaft rotational axis. With this in mind, handheld circular saws 10, according to the present disclosure, may not be, may not be referred to herein as, and/or may be distinguished from worm drive handheld circular saws.

The increase in maximum depth-of-cut 224 exhibited by handheld circular saws 10, according to the present disclosure, may be achieved in any suitable manner. According to the invention, and with continued reference to Figs. 1 and 11, arbor rotational axis 106 is spaced apart from shaft rotational axis 94 and/or is not collinear with the shaft rotational axis. Stated another way, arbor 100 is a distinct structure from motor shaft 92 and/or is configured to operatively engage with motor shaft 92 to receive the torque from motor shaft 92. According to the invention, motor shaft 92 includes and/or is operatively attached to a shaft gear 93. Additionally, the arbor 100 includes and/or is operatively attached to an arbor gear 101. Shaft gear 93 is configured to interface and/or to mesh with arbor gear 101, such as to convey, or efficiently convey, the torque from motor 90 to arbor 100, thereby rotating arbor 100 about arbor rotational axis 106. In some examples, and as illustrated, arbor gear 101 may be positioned between shaft gear 93 and workpiece support 300 and/or base plate 304 thereof. In some such examples, arbor rotational axis 106 may extend directly between shaft rotational axis 94 and workpiece support 300. Additionally or alternatively, in some such examples, a line that extends normal to arbor-facing side 308 and/or arbor-opposed side 312 of base plate 304 may pass through both arbor rotational axis 106 and shaft rotational axis 94. Such a configuration may permit arbor rotational axis 106 to be positioned closer to arbor-opposed side 312 of base plate 304 than otherwise would be possible if arbor rotational axis 106 were collinear with shaft rotational axis 94, thereby increasing maximum depth-of-cut 224 relative to conventional handheld circular saws within which the conventional arbor rotational axis may be collinear with the conventional shaft rotational axis. Stated another way, and as illustrated, motor 90 may have and/or define a motor diameter 91 that may be relatively large and/or that may significantly limit maximum depth-of-cut 224 if arbor rotational axis 106 were collinear with shaft rotational axis 94 and/or if arbor 100 were not positioned between shaft gear 93 and arbor gear 101.

With this in mind, and in some examples, an arbor gear diameter 102 of arbor gear 101 and/or a shaft gear diameter 95 of shaft gear 93 may be selected based, at least in part, on motor diameter 91, such as to permit and/or provide clearance for the arbor gear and the shaft gear. As an example, a sum of arbor gear diameter 102 and shaft gear diameter 95 may be a threshold gear diameter multiple and/or may be within a threshold gear diameter multiple range of motor diameter 91. Examples of the threshold gear diameter multiple and/or of the threshold gear diameter multiple range include multiples of at least 0.20, at least 0.22, at least 0.24, at least 0.26, at least 0.28, at least 0.3, at least 0.32, at least 0.34, at least 0.36, at least 0.38, at least 0.40, at least 0.42, at least 0.44, at least 0.46, at most 0.5, at most 0.48, at most 0.46, at most 0.44, at most 0.42, and/or at most 0.40. The arbor gear diameter, the shaft gear diameter, and the motor diameter also may be referred to herein as equivalent diameters and/or may be measured within a plane that is perpendicular to shaft rotational axis 94 and/or to arbor rotational axis 106.

According to the invention, motor diameter 91 is a threshold blade diameter multiple of blade diameter 220 and/or is within a threshold blade diameter multiple range of blade diameter 220. Examples of the threshold blade diameter multiple and/or of the threshold blade diameter multiple range include accordng to the invention multiples of at least 0.20, at least 0.22, at least 0.24, at least 0.26, at least 0.28, at least 0.3, at least 0.32, at least 0.34, at least 0.36, at least 0.38, at least 0.40, at least 0.42, at least 0.44, at least 0.46, at most 0.5, at most 0.48, at most 0.46, at most 0.44, at most 0.42, and/or at most 0.40.

Additionally or alternatively, arbor gear diameter 102 and shaft gear diameter 95 may be selected based, at least in part, on a desired rotational frequency, or rotational frequency range, for circular saw blade 200. As an example, a ratio of arbor gear diameter 102 to shaft gear diameter 95 may be a threshold gear diameter ratio and/or may be within a threshold gear diameter ratio range. Examples of the threshold gear diameter ratio and/or of the threshold gear diameter ratio range include ratios of at least 3, at least 2.75, at least 2.5, at least 2.25, at least 2, at least 1.75, at least 1.5, at least 1.25, at least 1, at least 0.75, at least 0.5, at most 5, at most 4.5, at most 4, at most 3.5, at most 3, at most 2.5, and/or at most 2.

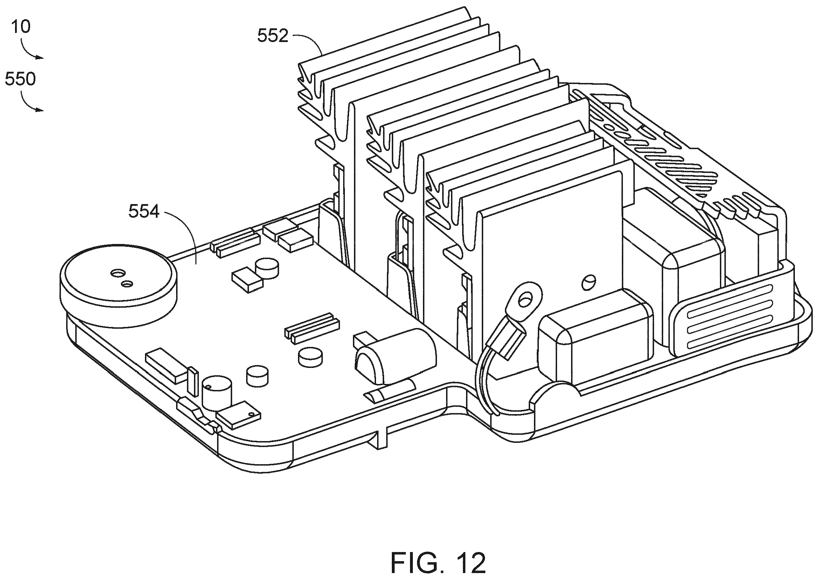

Figs. 12-13 are less schematic illustrations of examples of components 550 of handheld circular saws 10, according to the present disclosure. Handheld circular saws 10 of Figs. 12-13 may include and/or be more detailed and/or different illustrations, views, and/or examples of handheld circular saws 10 of Figs. 1-11. As such, any of the structures, functions, and/or features disclosed herein with reference to handheld circular saws 10 of Figs. 12-13 may be (but are not required in all examples to be) included in and/or utilized with handheld circular saws 10 of Figs. 1-11 without departing from the scope of the present disclosure. Similarly, any of the structures, functions, and/or features disclosed herein with reference to handheld circular saws 10 of Figs. 1-11 may be (but are not required in all examples to be) included in and/or utilized with handheld circular saws 10 of Figs. 12-13 without departing from the scope of the present disclosure.

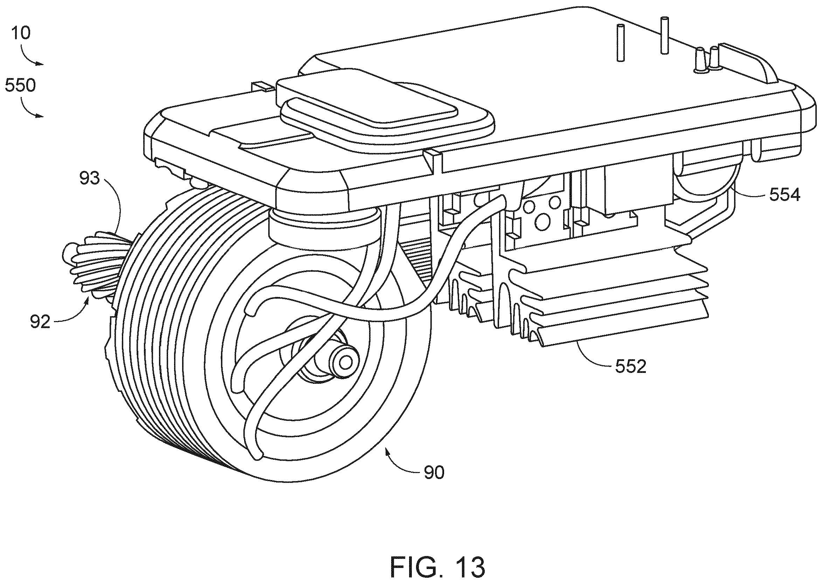

Fig. 12 illustrates a heat sink 552 and a motor controller 554 for handheld circular saws 10. Fig. 13 illustrates the heat sink and motor controller of Fig. 12 in combination with a motor 90 for the handheld circular saw. In handheld circular saws 10, according to the present disclosure, components 550 may be selected and/or oriented to decrease a width of handheld circular saws 10 when compared to conventional handheld circular saws.

As an example, and as illustrated in Figs. 1, 8-9, and 11, components 550 may be positioned such that a majority, a substantial majority, and/or at least a threshold fraction of the handheld circular saw is contained, or fully contained, within a footprint of the handheld circular saw. Examples of the threshold fraction include at least 90%, at least 92.5%, at least 95%, at least 97.5%, at least 99%, or an entirety of the handheld circular saw. Stated another way, the threshold fraction of the handheld circular saw, which is contained within the footprint of the handheld circular saw, does not project, or extend, past the footprint in a direction that is parallel to a plane within which the footprint is defined.

The footprint of the handheld circular saw may be defined by base plate 304 of the handheld circular saw. More specifically, the footprint of the handheld circular saw may be defined as a projection, or an outline, of base plate 304 as viewed from arbor-facing side 308 of the base plate. As used herein, the phrase "contained within a footprint of the handheld circular saw" may mean that the majority, the substantial majority, the at least the threshold fraction, and/or the entirety of the handheld circular saw does not project, or extend, past the projection, or the outline, of the base plate when viewed from arbor-facing side 308 of the base plate.

In some examples, and with continued reference to Figs. 1, 8-9, and 11, base plate 304 may define a base plate width 372. Base plate width 372 may be measured in a direction that is perpendicular, or at least substantially perpendicular, to a blade plane within which the circular saw blade rotates and/or may be parallel, or at least substantially parallel, to the arbor axis of rotation of the arbor of the handheld circular saw. In some examples of handheld circular saws 10, an entirety of the handheld circular saw may be contained within the base plate width.

Additionally or alternatively, components 550, including motor 90, heat sink 552, motor controller 554, and/or protective covers 556 for components 550, as illustrated in Fig. 8, may not project past an edge of the base plate, may project at least substantially the same or the same distance as the edge of the base plate, may be contained within the base plate width, and/or may project past the edge of the base plate less than a threshold distance. Examples of the threshold distance include distances of at most 1 millimeter (mm), at most 2 mm, at most 3 mm, at most 4 mm, at most 5 mm, at most 6 mm, at most 7 mm, at most 8 mm, at most 9 mm, and/or at most 10 mm. In some examples, base plate 304 may have and/or define a blade-opposed edge 380 and/or a blade-proximate edge 382, as illustrated in Fig. 8. In some such examples, components 550 may not project past, may project the same or at least substantially the same distance as, and/or may project less than the threshold distance past, the blade-opposed edge and/or the blade-proximate edge. This may be facilitated, for example, by positioning heat sink 552 and/or motor controller 554, relative to motor 90, such that neither the head sink nor the motor controller extends past motor 90 in a direction that is parallel to the base plate width, as illustrated in Fig. 13.

Such a configuration may permit handheld circular saws 10, according to the present disclosure, to access more confined areas and/or to make cuts closer to protruding structures than would be possible with conventional handheld circular saws. Additionally or alternatively, such a configuration may permit and/or facilitate improved and/or easier blade changes of circular saws 10. As an example, when a user desires to change the blade of circular saw 10, a blade-opposed side of the handheld circular saw may be supported on a surface such that the arbor is accessible to permit the blade change. When so supported, the above-described configuration permits the the blade-opposed side of the handheld circular saw to be level, or at least substantially level with the surface. Described in slightly different terms, the circular saw may not have components that project past the base plate width by more than the threshold distance, and the motor shaft and/or the shaft rotational axis may extend perpendicular, or at least substantially perpendicular, to the surface. Additionally or alternatively, the arbor-facing side of the base plate and/or the arbor-opposed side of the base plate may extend perpendicular, or at least substantially perpendicular, to the surface. Additionally or alternatively, the blade plane may extend parallel, or at least substantially parallel, to the surface.

As used herein, the term "and/or" placed between a first entity and a second entity means one of (1) the first entity, (2) the second entity, and (3) the first entity and the second entity. Multiple entities listed with "and/or" should be construed in the same manner, i.e., "one or more" of the entities so conjoined. Other entities may optionally be present other than the entities specifically identified by the "and/or" clause, whether related or unrelated to those entities specifically identified. Thus, as a non-limiting example, a reference to "A and/or B," when used in conjunction with open-ended language such as "comprising" may refer, in one embodiment, to A only (optionally including entities other than B); in another embodiment, to B only (optionally including entities other than A); in yet another embodiment, to both A and B (optionally including other entities). These entities may refer to elements, actions, structures, steps, operations, values, and the like.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one embodiment, to at least one, optionally including more than one, A, with no B present (and optionally including entities other than B); in another embodiment, to at least one, optionally including more than one, B, with no A present (and optionally including entities other than A); in yet another embodiment, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

In the event that any patents, patent applications, or other references are incorporated by reference herein and (1) define a term in a manner that is inconsistent with and/or (2) are otherwise inconsistent with, either the non-incorporated portion of the present disclosure or any of the other incorporated references, the non-incorporated portion of the present disclosure shall control, and the term or incorporated disclosure therein shall only control with respect to the reference in which the term is defined and/or the incorporated disclosure was present originally.

As used herein the terms "adapted" and "configured" mean that the element, component, or other subject matter is designed and/or intended to perform a given function. Thus, the use of the terms "adapted" and "configured" should not be construed to mean that a given element, component, or other subject matter is simply "capable of" performing a given function but that the element, component, and/or other subject matter is specifically selected, created, implemented, utilized, programmed, and/or designed for the purpose of performing the function. It is also within the scope of the present disclosure that elements, components, and/or other recited subject matter that is recited as being adapted to perform a particular function may additionally or alternatively be described as being configured to perform that function, and vice versa.

As used herein, the phrase, "for example," the phrase, "as an example," and/or simply the term "example," when used with reference to one or more components, features, details, structures, embodiments, and/or methods according to the present disclosure, are intended to convey that the described component, feature, detail, structure, embodiment, and/or method is an illustrative, non-exclusive example of components, features, details, structures, embodiments, and/or methods according to the present disclosure. Thus, the described component, feature, detail, structure, embodiment, and/or method is not intended to be limiting, required, or exclusive/exhaustive; and other components, features, details, structures, embodiments, and/or methods, including structurally and/or functionally similar and/or equivalent components, features, details, structures, embodiments, and/or methods, are also within the scope of the present disclosure.

As used herein, "at least substantially," when modifying a degree or relationship, may include not only the recited "substantial" degree or relationship, but also the full extent of the recited degree or relationship. A substantial amount of a recited degree or relationship may include at least 75% of the recited degree or relationship. For example, an object that is at least substantially formed from a material includes objects for which at least 75% of the objects are formed from the material and also includes objects that are completely formed from the material. As another example, a first length that is at least substantially as long as a second length includes first lengths that are within 75% of the second length and also includes first lengths that are as long as the second length.

It is believed that the disclosure set forth above encompasses multiple distinct inventions with independent utility. While each of these inventions has been disclosed in its preferred form, the specific embodiments thereof as disclosed and illustrated herein are not to be considered in a limiting sense, but within the scope of the invention as defined by the claims.

## Claims

1. A handheld circular saw (10), comprising:
a motor (90) including a motor shaft (92) configured to rotate about a shaft rotational axis (94);
a circular saw blade (200); and
an arbor (100) configured to operatively attach the circular saw blade (200) having a blade diameter (220) to the handheld circular saw (10) and to receive a torque from the motor (90) when the motor shaft (92) rotates about the shaft rotational axis (94);
wherein the handheld circular saw (10) has a maximum depth-of-cut (224), and further wherein a ratio of the maximum depth-of-cut (224) to the blade diameter (220) is at least 0.35 and at most 0.45,
wherein the motor (90) defines a motor diameter (91), and further wherein a ratio of the motor diameter (91) to the blade diameter (220) is at least 0.20 and at most 0.6,
wherein the arbor (100) is configured to rotate about an arbor rotational axis (106), wherein the arbor rotational axis (106) is parallel to the shaft rotational axis (94), wherein the arbor (100) is distinct from the motor shaft (92) and is configured to operatively engage with the motor shaft (92) to receive the torque from the motor shaft (92),
wherein. the motor shaft (92) includes and/or is operatively attached to a shaft gear (93),
wherein the arbor (100) includes and/or is operatively attached to an arbor gear (101), and
wherein the shaft gear (93) is configured to interface and/or to mesh with the arbor gear (101)

2. The handheld circular saw (10) of claim 1, wherein the handheld circular saw (10) further includes a workpiece support (300) configured to position a workpiece (98) and the handheld circular saw (10) relative to one another when the workpiece (98) is cut by the handheld circular saw (10).

3. The handheld circular saw (10) of any of claims 1-2, wherein the arbor (100) includes an arbor gear (101), wherein the motor shaft (92) includes a shaft gear (93), and further wherein the shaft gear (93) is configured to interface with the arbor gear (101) to convey the torque from the motor shaft (92) to the arbor (100), wherein the arbor gear (101) preferably is positioned between the shaft gear (93) and the workpiece support (300).

4. The handheld circular saw (10) of any of claims 1-3, wherein the arbor rotational axis (106) extends directly between the shaft rotational axis (94) and the workpiece support (300).

5. The handheld circular saw (10) of any of claims 1-4, wherein the workpiece support (300) includes a base plate (304) that defines an arbor-facing side (308) and an arbor-opposed side (312).

6. The handheld circular saw (10) of claim 5, wherein the handheld circular saw (10) is a plunge saw (30), and further wherein the arbor (100) is operatively attached to the arbor-facing side (308) of the base plate (304) via a base plate pivot (316) and the arbor-facing side (308) of the base plate (304) faces toward the arbor (100), wherein preferably provision is made for the arbor (100) and the base plate (304) to be configured to operatively rotate, relative to one another, about the base plate pivot (316) to selectively vary a region of the circular saw blade (200) that extends on the arbor-opposed side (312) of the base plate (304).

7. The handheld circular saw (10) of any of claims 5-6, wherein the handheld circular saw (10) is a track saw (40), wherein the base plate (304) further includes a rib-receiving channel (324) configured to receive a raised elongate rib (44) of a track (42, wherein preferably provision is made for the track saw (40) to further include the track (42), and for the track (42) to include the raised elongate rib (44).

8. The handheld circular saw (10) of any of claims 1-7, wherein the arbor gear (101) defines an arbor gear diameter (102), wherein the shaft gear (93) defines a shaft gear diameter (95), wherein the motor (90) defines a motor diameter (91), wherein a sum of the arbor gear diameter (102) and the shaft gear diameter (95) is a threshold gear diameter multiple of the motor diameter (91), and further wherein the threshold gear diameter multiple is at least 0.20 and at most 0.65.

9. The handheld circular saw (10) of any of claims 1-8, wherein a ratio of the arbor gear diameter (102) to the shaft gear diameter (95) is a threshold gear diameter ratio, wherein the threshold gear diameter ratio is at least 0.5 and at most 5.

10. The handheld circular saw (10) of any of claims 5-9, wherein a projection of the base plate (304), as viewed from the arbor-facing side (308), defines a footprint for the handheld circular saw (10), and further wherein at least 95% of the handheld circular saw (10) is fully contained within the footprint.

11. The handheld circular saw (10) of any of claims 5-10, wherein an entirety of the handheld circular saw (10) is contained within a base plate width (372) of the base plate (304).

12. The handheld circular saw (10) of any of claims 5-11, wherein the handheld circular saw (10) includes a motor controller (554) and a heat sink (552) for the motor controller (554), and further wherein the motor controller (554) and the heat sink (552) are positioned, within the handheld circular saw (10) and relative to the motor (90), such that neither the motor controller (554) nor the heat sink (552) extends past the motor (90) in a direction that is parallel to the base plate width (372) of the base plate (304).

13. The handheld circular saw (10) of any of claims 1-12, wherein, when a blade-opposed side of the handheld circular saw (10) is supported on a surface such that the arbor (100) is accessible to permit a blade change, the shaft rotational axis (94) extends perpendicular to the surface.

14. The handheld circular saw (10) of any of claims 1-13, wherein the handheld circular saw (10) further includes a gripping region (60) configured to be gripped by a user of the handheld circular saw (10) during operation of the handheld circular saw (10), and/or wherein the handheld circular saw (10) is a battery powered handheld circular saw (10), and/or wherein the handheld circular saw (10) further comprises the circular saw blade (200), which is operatively attached to the handheld circular saw (10) by the arbor (100).

## Patentansprüche

1. Eine Handkreissäge (10), umfassend:
einen Motor (90) mit einer Motorwelle (92), die dazu ausgebildet ist, sich um eine Wellenrotationsachse (94) zu drehen;
ein Kreissägeblatt (200); und
einen Dorn (100), der dazu ausgebildet ist, das Kreissägeblatt (200) an der Handkreissäge (10) zu halten und ein Drehmoment von dem Motor (90) aufzunehmen, wenn sich die Motorwelle (92) um die Wellenrotationsachse (94) dreht, wobei Kreissägeblatt (200) einen Blattdurchmesser (220) aufweist;
wobei die Handkreissäge (10) eine maximale Schnitttiefe (224) aufweist, und wobei ferner ein Verhältnis der maximalen Schnitttiefe (224) zu dem Blattdurchmesser (220) mindestens 0,35 und höchstens 0,45 beträgt,
wobei der Motor (90) einen Motordurchmesser (91) definiert, und wobei ferner ein Verhältnis des Motordurchmessers (91) zu dem Blattdurchmesser (220) mindestens 0,20 und höchstens 0,6 beträgt,
wobei der Dorn (100) dazu ausgebildet ist, sich um eine Dornrotationsachse (106) zu drehen, wobei die Dornrotationsachse (106) parallel zu der Wellenrotationsachse (94) ist, wobei sich der Dorn (100) von der Motorwelle (92) unterscheidet und dazu ausgebildet ist, mit der Motorwelle (92) in Wirkeingriff zu treten, um das Drehmoment von der Motorwelle (92) aufzunehmen,
wobei die Motorwelle (92) ein Wellenzahnrad (93) aufweist und/oder daran befestigt ist,
wobei der Dorn (100) ein Dornzahnrad (101) aufweist und/oder daran befestigt ist, und
wobei das Wellenzahnrad (93) dazu ausgebildet ist, mit dem Dornzahnrad (101) zusammenzuwirken und/oder zu kämmen.

2. Handkreissäge (10) nach Anspruch 1, wobei die Handkreissäge (10) ferner eine Werkstückauflage (300) umfasst, die dazu ausgebildet ist, ein Werkstück (98) und die Handkreissäge (10) relativ zueinander zu positionieren, wenn das Werkstück (98) von der Handkreissäge (10) geschnitten wird.

3. Handkreissäge (10) nach einem der Ansprüche 1 bis 3, wobei der Dorn (100) ein Dornzahnrad (101) aufweist, wobei die Motorwelle (92) ein Wellenzahnrad (93) aufweist, und wobei ferner das Wellenzahnrad (93) dazu ausgebildet ist, mit dem Dornzahnrad (101) zusammenzuwirken, um das Drehmoment von der Motorwelle (92) auf den Dorn (100) zu übertragen, wobei das Dornzahnrad (101) vorzugsweise zwischen dem Wellenzahnrad (93) und der Werkstückauflage (300) angeordnet ist.

4. Handkreissäge (10) nach einem der Ansprüche 1 bis 3, wobei die Dornrotationsachse (106) direkt zwischen der Wellenrotationsachse (94) und der Werkstückauflage (300) verläuft.

5. Handkreissäge (10) nach einem der Ansprüche 1 bis 4, wobei die Werkstückauflage (300) eine Grundplatte (304) aufweist, die eine dem Dorn zugewandte Seite (308) und eine dem Dorn abgewandte Seite (312) definiert.

6. Handkreissäge (10) nach Anspruch 5, wobei die Handkreissäge (10) eine Tauchsäge (30) ist, und wobei ferner der Dorn (100) über ein Grundplattengelenk (316) an der dem Dorn zugewandten Seite (308) der Grundplatte (304) befestigt ist und die dem Dorn zugewandte Seite (308) der Grundplatte (304) dem Dorn (100) zugewandt ist, wobei vorzugsweise vorgesehen ist, dass der Dorn (100) und die Grundplatte (304) dazu ausgebildet sind, sich im Betrieb relativ zueinander um das Grundplattengelenk (316) zu drehen, um selektiv einen Bereich des Kreissägeblatts (200) zu verändern, der sich auf der dem Dorn abgewandten Seite (312) der Grundplatte (304) erstreckt.

7. Handkreissäge (10) nach einem der Ansprüche 5 bis 6, wobei die Handkreissäge (10) eine Schienensäge (40) ist, wobei die Grundplatte (304) ferner einen Rippenaufnahmekanal (324) aufweist, der dazu ausgebildet ist, eine erhabene längliche Rippe (44) einer Schiene (42) aufzunehmen, wobei vorzugsweise vorgesehen ist, dass die Schienensäge (40) ferner die Schiene (42) aufweist und dass die Schiene (42) die erhabene längliche Rippe (44) aufweist.

8. Handkreissäge (10) nach einem der Ansprüche 1 bis 7, wobei das Dornzahnrad (101) einen Dornzahnraddurchmesser (102) definiert, wobei das Wellenzahnrad (93) einen Wellenzahnraddurchmesser (95) definiert, wobei der Motor (90) einen Motordurchmesser (91) definiert, wobei eine Summe des Dornzahnraddurchmessers (102) und des Wellenzahnraddurchmessers (95) ein Schwellenwert-Zahnraddurchmesser-Vielfaches des Motordurchmessers (91) ist, und wobei ferner das Schwellenwert-Zahnraddurchmesser-Vielfache mindestens 0,20 und höchstens 0,65 beträgt.

9. Handkreissäge (10) nach einem der Ansprüche 1 bis 8, wobei ein Verhältnis des Dornzahnraddurchmessers (102) zu dem Wellenzahnraddurchmesser (95) ein Schwellenzahnraddurchmesserverhältnis ist, wobei das Schwellenzahnraddurchmesserverhältnis mindestens 0,5 und höchstens 5 beträgt.

10. Handkreissäge (10) nach einem der Ansprüche 5-9, wobei eine Projektion der Grundplatte (304), von der dem Dorn zugewandten Seite (308) aus gesehen, einen Fußabdruck für die Handkreissäge (10) definiert, und wobei ferner mindestens 95 % der Handkreissäge (10) vollständig innerhalb des Fußabdrucks enthalten sind.

11. Handkreissäge (10) nach einem der Ansprüche 5-10, wobei die gesamte Handkreissäge (10) innerhalb einer Grundplattenbreite (372) der Grundplatte (304) aufgenommen ist.

12. Handkreissäge (10) nach einem der Ansprüche 5-11, wobei die Handkreissäge (10) eine Motorsteuerung (554) und eine Wärmesenke (552) für die Motorsteuerung (554) aufweist, und wobei ferner die Motorsteuerung (554) und die Wärmesenke (552) innerhalb der Handkreissäge (10) und relativ zu dem Motor (90) so positioniert sind, dass weder die Motorsteuerung (554) noch die Wärmesenke (552) sich über den Motor (90) hinaus in einer Richtung erstrecken, die parallel zu der Grundplattenbreite (372) der Grundplatte (304) ist.

13. Handkreissäge (10) nach einem der Ansprüche 1 bis 12, wobei, wenn eine dem Dorn (100) abgewandte Seite der Handkreissäge (10) auf einer Oberfläche so abgestützt ist, dass der Dorn (100) zugänglich ist, um einen Blattwechsel zu ermöglichen, die Wellenrotationsachse (94) senkrecht zur Oberfläche verläuft.

14. Handkreissäge (10) nach einem der Ansprüche 1 bis 13, wobei die Handkreissäge (10) ferner einen Greifbereich (60) umfasst, der dazu ausgebildet ist, von einem Benutzer der Handkreissäge (10) während des Betriebs der Handkreissäge (10) ergriffen zu werden, und/oder wobei die Handkreissäge (10) eine batteriebetriebene Handkreissäge (10) ist, und/oder wobei die Handkreissäge (10) ferner das Kreissägeblatt (200) umfasst, das durch den Dorn (100) funktionsfähig an der Handkreissäge (10) befestigt ist.

## Revendications

1. Scie circulaire portative (10), comprenant :
un moteur (90) comprenant un arbre moteur (92) configuré pour tourner autour d'un axe de rotation d'arbre (94) ;
une lame de scie circulaire (200) ; et
un mandrin (100) configuré pour fixer de manière opérationnelle la lame de scie circulaire (200) ayant un diamètre de lame (220) à la scie circulaire portative (10) et pour recevoir un couple provenant du moteur (90) lorsque l'arbre moteur (92) tourne autour de l'axe de rotation de l'arbre (94) ;
dans laquelle la scie circulaire portative (10) a une profondeur de coupe maximale (224), et dans laquelle, en outre, le rapport entre la profondeur de coupe maximale (224) et le diamètre de lame (220) est d'au moins 0,35 et d'au plus 0,45,
dans laquelle le moteur (90) définit un diamètre de moteur (91), et dans lequel le rapport entre le diamètre de moteur (91) et le diamètre de lame (220) est compris entre 0,20 et 0,6,
dans laquelle le mandrin (100) est configuré pour tourner autour d'un axe de rotation de mandrin (106), dans laquelle l'axe de rotation de mandrin (106) est parallèle à l'axe de rotation d'arbre (94), dans laquelle le mandrin (100) est distinct de l'arbre moteur (92) et est configuré pour s'engager de manière opérationnelle avec l'arbre moteur (92) afin de recevoir le couple provenant de l'arbre moteur (92),
dans lequel l'arbre moteur (92) comprend et/ou est relié de manière opérationnelle à une roue dentée d'arbre (93),
dans lequel le mandrin (100) comprend et/ou est relié de manière opérationnelle à une roue dentée de mandrin (101), et
dans lequel la roue dentée d'arbre (93) est configurée pour s'interfacer et/ou s'engrener avec la roue dentée de mandrin (101).

2. La scie circulaire portative (10) selon la revendication 1, dans laquelle la scie circulaire portative (10) comprend en outre un support de pièce à usiner (300) configuré pour positionner une pièce à usiner (98) et la scie circulaire portative (10) l'une par rapport à l'autre lorsque la pièce à usiner (98) est coupée par la scie circulaire portative (10).

3. La scie circulaire portative (10) selon l'une quelconque des revendications 1 à 2, dans laquelle le mandrin (100) comprend une roue dentée de mandrin (101), dans laquelle l'arbre du moteur (92) comprend une roue dentée d'arbre (93), et dans laquelle, en outre, la roue dentée d'arbre (93) est configurée pour s'interfacer avec la roue dentée de mandrin (101) afin de transmettre le couple de l'arbre moteur (92) au mandrin (100), dans laquelle la roue dentée de mandrin (101) est de préférence positionnée entre la roue dentée d'arbre (93) et le support de pièce à usiner (300).

4. La scie circulaire portative (10) selon l'une quelconque des revendications 1 à 3, dans laquelle l'axe de rotation de mandrin (106) s'étend directement entre l'axe de rotation d'arbre (94) et le support de pièce à usiner (300).

5. La scie circulaire portative (10) selon l'une quelconque des revendications 1 à 4, dans laquelle le support de pièce à usiner (300) comprend une plaque de base (304) qui définit un côté tourné vers le mandrin (308) et un côté opposé au mandrin (312).

6. La scie circulaire portative (10) selon la revendication 5, dans laquelle la scie circulaire portative (10) est une scie plongeante (30), et dans laquelle, en outre, le mandrin (100) est fixé de manière fonctionnelle au côté (308) de la plaque de base (304) tourné vers le mandrin via un pivot (316) de la plaque de base, et le côté (308) de la plaque de base (304) tourné vers le mandrin est orienté vers le mandrin (100), dans laquelle il est de préférence prévu que le mandrin (100) et la plaque de base (304) soient configurés pour tourner de manière opérationnelle l'un par rapport à l'autre autour du pivot de la plaque de base (316) afin de faire varier de manière sélective une région de la lame de scie circulaire (200) qui s'étend sur le côté opposé au mandrin (312) de la plaque de base (304).

7. La scie circulaire portative (10) de l'une quelconque des revendications 5 à 6, dans laquelle la scie circulaire portative (10) est une scie à rail (40), dans laquelle la plaque de base (304) comprend en outre un canal de réception de nervure (324) configuré pour recevoir une nervure allongée surélevée (44) d'un rail (42), dans laquelle il est de préférence prévu que la scie circulaire sur rail (40) comprenne en outre le rail (42) et que le rail (42) comprenne la nervure allongée surélevée (44).

8. La scie circulaire portative (10) de l'une quelconque des revendications 1 à 7, dans laquelle la roue dentée de mandrin (101) définit un diamètre de roue dentée de mandrin (102), dans laquelle la roue dentée d'arbre (93) définit un diamètre de roue dentée d'arbre (95), dans laquelle le moteur (90) définit un diamètre de moteur (91), dans lequel la somme du diamètre de roue dentée de mandrin (102) et du diamètre de roue dentée d'arbre (95) est un multiple de diamètre de roue dentée seuil du diamètre de moteur (91), et dans lequel le multiple de diamètre de roue dentée seuil est au moins égal à 0,20 et au plus égal à 0,65.

9. La scie circulaire portative (10) selon l'une quelconque des revendications 1 à 8, dans laquelle un rapport entre le diamètre de la roue dentée de mandrin (102) et le diamètre de la roue dentée d'arbre (95) est un rapport de diamètre de roue dentée de mandrin de seuil, dans laquelle le rapport de diamètre de roue dentée de mandrin de seuil est d'au moins 0,5 et d'au plus 5.

10. La scie circulaire portative (10) selon l'une quelconque des revendications 5 à 9, dans laquelle une saillie de la plaque de base (304), vue depuis le côté tourné vers le mandrin (308), définit une empreinte pour la scie circulaire portative (10), et dans laquelle au moins 95 % de la scie circulaire portative (10) est entièrement contenue dans l'empreinte.

11. La scie circulaire portative (10) selon l'une quelconque des revendications 5 à 10, dans laquelle la totalité de la scie circulaire portative (10) est contenue dans une largeur de plaque de base (372) de la plaque de base (304).

12. La scie circulaire portative (10) de l'une quelconque des revendications 5 à 11, dans laquelle la scie circulaire portative (10) comprend un contrôleur de moteur (554) et un dissipateur thermique (552) pour le contrôleur de moteur (554), et dans laquelle, en outre, le contrôleur de moteur (554) et le dissipateur thermique (552) sont positionnés, à l'intérieur de la scie circulaire portative (10) et par rapport au moteur (90), de telle sorte que ni le contrôleur de moteur (554) ni le dissipateur thermique (552) ne s'étendent au-delà du moteur (90) dans une direction parallèle à la largeur de plaque de base (372) de la plaque de base (304).

13. La scie circulaire portative (10) de l'une quelconque des revendications 1 à 12, dans laquelle, lorsqu'un côté opposé au mandrin de la scie circulaire portative (10) est supporté sur une surface de telle sorte que le mandrin (100) est accessible pour permettre un changement de lame, l'axe de rotation de l'arbre (94) s'étend perpendiculairement à la surface.

14. La scie circulaire portative (10) selon l'une quelconque des revendications 1 à 13, dans laquelle la scie circulaire portative (10) comprend en outre une zone de préhension (60) configurée pour être saisie par un utilisateur de la scie circulaire portative (10) pendant le fonctionnement de la scie circulaire portative (10), et/ou dans laquelle la scie circulaire portative (10) est une scie circulaire portative alimentée par batterie (10), et/ou dans laquelle la scie circulaire portative (10) comprend en outre la lame de scie circulaire (200), qui est fixée de manière opérationnelle à la scie circulaire portative (10) par le mandrin (100).
